# EUROPÄISCHE PATENTSCHRIFT

(11) **EP 3 982 005 B1**
(45) Veröffentlichungstag und Bekanntmachung des Hinweises auf die Patenterteilung: **20.03.2024**
(21) Anmeldenummer: 21200962.5
(22) Anmeldetag: 05.10.2021
(51) Int. Cl.: F16H 25/06, F16C 19/12, F16C 23/06, F16H 1/28

(54) **KOAXIALGETRIEBE**
COAXIAL TRANSMISSION
ENGRENAGE COAXIAL

(30) Priorität: 06.10.2020 DE 102020126114
(43) Veröffentlichungstag der Anmeldung: 13.04.2022
(73) Patentinhaber: WITTENSTEIN SE, 97999 Igersheim (DE)
(72) Erfinder: Bayer, Thomas, 97999 Igersheim (DE); Schmidt, Michael, 97234 Reichenberg (DE); Kuemmeth, Andreas, 97199 Ochsenfurt (DE); Rossmeißl, Thomas, 74653 Künzelsau (DE)
(74) Vertreter: Zimmermann & Partner Patentanwälte mbB

(56) Entgegenhaltungen:
- WO-A1-2021/036148
- CN-A- 110 645 334
- DE-A1- 3 930 064
- JP-A- 2003 042 240

## Beschreibung

### Gebiet der Erfindung

Die Erfindung betrifft ein Koaxialgetriebe und die Verwendung eines Koaxialgetriebes.

### Stand der Technik

Aus dem Stand der Technik sind Getriebe bekannt, welche Zähne umfassen, die in einem Zahnträger radial verschieblich gelagert sind. Zum Antrieb der Zähne in einer radialen Richtung werden Antriebselemente mit einer Profilierung, wie beispielsweise Kurvenscheiben, verwendet. Die Zähne werden in radialer Richtung bewegt und greifen in eine Verzahnung ein, so dass es zu einer Relativbewegung zwischen dem Zahnträger mit den Zähnen und der Verzahnung kommt. Die Relativbewegung zwischen Verzahnung und Zähnen ist dabei um mindestens eine Größenordnung geringer als die Bewegung des Antriebselementes mit der Profilierung. Auf diese Weise lassen sich hohe Übersetzungen erzielen, ein Beispiel eines solchen Getriebes ist in der DE 10 2007 011 175 A1 veröffentlicht.

Die nach dem für diese Anmeldung relevanten Datum veröffentlichte WO 2021/036148 A1 bildet lediglich Stand der Technik nach Art 54(3) EPÜ. Dieses Dokument zeigt ein Koaxialgetriebe mit axial ausgerichteten Zähnen und einer gegenüber dem Gehäuse rotierbaren Verzahnung. Dokument CN110645334 A zeigt ebenfalls ein Koaxialgetriebe mit axial ausgerichteten Zähnen,

Allerdings weisen bisher bekannte Lösungen aus dem Stand der Technik Restriktionen in Bezug auf die Übertragung von Drehmomenten auf oder weisen eine hohe Anzahl an Einzelteilen auf oder erfordern eine aufwendige Montage. Weiterhin ist der Platzbedarf in radialer Richtung bei Hohlwellengetrieben oder auch in axialer Richtung teilweise zu groß.

### Offenbarung der Erfindung

Aufgabe der Erfindung ist es, ein Koaxialgetriebe anzugeben, welches gegenüber aus dem Stand der Technik bekannten Koaxialgetrieben verbessert ist, wobei insbesondere eine Übertragung höherer Drehmomente oder ein vereinfachter Aufbau aus einer geringeren Anzahl an Einzelteilen oder eine vereinfachte Montage oder eine kompakte Bauform erreicht werden soll.

Die Aufgabe wird mit einem Koaxialgetriebe nach dem Anspruch 1 und einer Verwendung nach dem nebengeordneten Anspruch gelöst. Vorteilhafte Weiterbildungen und Ausführungsformen ergeben sich aus den Unteransprüchen.

Ein Aspekt der Erfindung betrifft ein Koaxialgetriebe, mit einem Gehäuse, einer bezüglich einer Drehachse des Koaxialgetriebes axial ausgerichteten Verzahnung, welche fest mit einem Teil des Gehäuses verbunden oder integral mit dem Gehäuse ausgeführt ist, einem Zahnträger mit axial ausgerichteten Führungen; Zähnen, welche in den Führungen zum Eingriff mit der Verzahnung aufgenommen sind, wobei die Zähne in den Führungen mit ihren jeweiligen Längsachsen axial ausgerichtet und in den Führungen axial verschieblich gelagert sind; einer um die Drehachse rotierbaren Kurvenscheibe zum axialen Antrieb der Zähne; einem in dem Gehäuse zur Lagerung der Kurvenscheibe vorgesehenen Anstellelement, wobei zwischen dem Anstellelement und der Kurvenscheibe zumindest ein Lager mit Wälzkörpern angeordnet ist.

Ein weiterer Aspekt der Erfindung betrifft eine Verwendung eines hierin beschriebenen typischen Koaxialgetriebes.

Typischerweise sind hierin Ausdrücke wie "axial", "radial" oder "Umfangsrichtung" bezüglich der Drehachse des Koaxialgetriebes zu verstehen, beispielsweise bezüglich der Drehachse der Kurvenscheibe des Koaxialgetriebes.

Bei typischen Ausführungsformen liegen die Wälzkörper unmittelbar auf einer Kurvenscheibenlagerfläche der Kurvenscheibe oder unmittelbar auf einer Anstellelementlagerfläche des Anstellelementes auf. Bei weiteren Ausführungsformen liegen die Wälzkörper unmittelbar auf beiden dieser Flächen auf. In typischen Ausführungsformen ist das Anstellelement als Lagerring, insbesondere eines Lagers zur axialen Lagerung der Kurvenscheibe, mit einer Anstellelementlagerfläche ausgeführt. Typischerweise ist das Anstellelement axial zustellbar ausgeführt, d.h. dass dessen axiale Position im Verhältnis zum Gehäuse zur Einstellung eines Verdrehspiels des Getriebes veränderbar ist. Im Betriebszustand ist das Anstellelement drehfest mit dem Gehäuse verbunden. Eine weitere Möglichkeit zur Veränderung der axialen Position des Anstellelements bzw. dessen Lagerebene, auf welcher die Wälzkörper aufliegen, kann ein Austausch des Anstellelements oder eine Veränderung einer Dicke des Anstellelementes sein.

Bei typischen Ausführungsformen sind die Führungen des Zahnträgers bezüglich der Drehachse des Koaxialgetriebes axial ausgerichtet. Typischerweise sind die Zähne in den Führungen des Zahnträgers axial verschieblich gelagert. Typischerweise sind die Zähne in dem Zahnträger jeweils in genau einer Richtung verschieblich gelagert, typischerweise in Richtung der Längsachse des Zahnes. Dies kann beispielsweise dadurch erreicht werden, dass der Zahn über eine bestimmte Länge, insbesondere über eine bestimmte Länge entlang der Längsachse des Zahnes, einen gleichbleibenden Querschnitt in Verschieberichtung aufweist. Typischerweise ist die Führung für den Zahn in dem Zahnträger als Schlitz oder Öffnung mit in axialer Richtung gleichbleibendem Querschnitt ausgeführt ist. Insbesondere ist die Führung als Bohrung ausgeführt.

Typische Zahnträger umfassen Führungen mit jeweils einer Zahnbasisöffnung an einer Zahnbasisseite des Zahnträgers und einer Zahnkopföffnung an einer Zahnkopfseite des Zahnträgers. Typischerweise ist die Zahnbasisöffnung in Richtung der Kurvenscheibe ausgerichtet und die Zahnkopföffnung in Richtung der Verzahnung. Dies ermöglicht die Aufnahme der Zähne, so dass die Zähne entlang ihrer jeweiligen Längsachse in der Führung axial bezüglich der Drehachse des Koaxialgetriebes verschieblich gelagert sind. Die Längsachse eines Zahnes verläuft typischerweise von einer Zahnbasis des Zahnes zu einem Zahnkopf des Zahnes. Typischerweise sind die Zähne mit ihrer Zahnbasis auf Lagersegmenten gelagert, welche wiederum auf der Kurvenscheibe gelagert sind. Der Zahnträger ist bei typischen Ausführungsformen kreisförmig oder ringförmig. Typische Führungen für die Zähne in dem Zahnträger sind als Durchgangsöffnungen oder Durchgangsbohrungen ausgebildet. Weitere typische Zahnträger umfassen rechteckige Einfräsungen oder Langlöcher oder Schlitze als Führungen.

Bei typischen Ausführungsformen umfasst das Koaxialgetriebe eine Kurvenscheibe mit einer Profilierung als Antriebselement zum axialen Antrieb der Zähne, insbesondere durch Axialhub der Zähne. Typischerweise ist die Profilierung entlang der Umfangsrichtung der Kurvenscheibe mit mindestens einer Erhebung in axialer Richtung ausgeführt, insbesondere mit mindestens zwei oder mindestens drei Erhebungen. Durch den rotativen Antrieb der Kurvenscheibe mit der Profilierung ist über die Lagersegmente eine Kraft in Richtung der jeweiligen Längsachse der Zähne auf die Zähne ausübbar, so dass diese in axialer Richtung aus den Führungen an der Zahnkopfseite des Zahnträgers herausgedrückt werden.

Typische Koaxialgetriebe umfassen eine axial ausgerichtete Verzahnung. Insbesondere kann die Verzahnung als Verzahnung eines Planrads, welches integral mit dem Gehäuse oder als Teil des Gehäuses gebildet sein kann, ausgeführt sein.

Typische Koaxialgetriebe weisen eine Antriebswelle und eine Abtriebswelle auf. Die Antriebswelle kann bei Ausführungsformen integral mit der Kurvenscheibe ausgeführt sein. Bei weiteren Ausführungsformen kann die Abtriebswelle integral mit dem Zahnträger ausgeführt sein.

Typischerweise sind die Antriebswelle und die Abtriebswelle um die Drehachse des Koaxialgetriebes drehbar gelagert. Typischerweise sind die Antriebswelle oder die Abtriebswelle oder beide als Hohlwellen ausgeführt. Typischerweise ist die Kurvenscheibe an der Antriebswelle vorgesehen, wobei Antriebswelle und Kurvenscheibe insbesondere einteilig, zweiteilig oder mehrteilig ausgeführt sein können. Bei typischen Ausführungsformen ist der Zahnträger an der Abtriebswelle vorgesehen, wobei insbesondere die Verzahnung drehfest mit einem Gehäuse des Koaxialgetriebes verbunden ist oder nicht relativ zu dem Gehäuse drehbar ist.

Bei typischen Ausführungsformen der erfindungsgemäßen Koaxialgetriebe ist zumindest ein Teil der Zähne biegesteif ausgeführt. Der Begriff "biegesteif" ist dabei typischerweise technisch zu verstehen, das heißt, dass Biegungen der Zähne aufgrund der Steifigkeit des Materials der Zähne derart klein sind, dass sie für die Kinematik des Koaxialgetriebes zumindest im Wesentlichen unbedeutend sind. Biegesteife Zähne umfassen insbesondere Zähne, welche aus einer Metalllegierung, insbesondere Stahl oder einer Titanlegierung, einer Nickellegierung oder anderen Legierungen hergestellt sind. Weiterhin können auch biegesteife Zähne aus Kunststoff vorgesehen werden, insbesondere bei Koaxialgetrieben, bei welchen auch zumindest einer der folgenden Teile ebenfalls aus Kunststoff hergestellt ist: Verzahnung, Zahnträger und Antriebselement. Bei typischen Ausführungsformen sind der Zahnträger und die Zähne aus einer Metalllegierung oder zusätzlich noch die Verzahnung oder weiter zusätzlich das Antriebselement aus einer Metalllegierung hergestellt. Solche Koaxialgetriebe bieten den Vorteil, dass sie äußerst verdrehsteif und hoch belastbar sind. Koaxialgetriebe aus Kunststoff bieten den Vorteil, dass sie ein geringes Gewicht aufweisen. Mit dem Ausdruck "biegesteif" ist insbesondere eine Biegesteifigkeit um eine Querachse des Zahns gemeint. Dies bedeutet insbesondere, dass bei einer Ansicht des Zahns als Balken von einer Zahnbasis zu einem Zahnkopf eine Biegesteifigkeit vorliegt, welche Biegeverformungen zwischen Zahnkopf und Zahnbasis zumindest im Wesentlichen ausschließt. Durch die Biegesteifigkeit wird eine extrem hohe Belastbarkeit und Verdrehsteifigkeit des Koaxialgetriebes erreicht.

Die Verzahnung und die Zähne weisen typischerweise gekrümmte Flanken auf. Beispiele für Krümmungen der Flanken sind eine zylinderförmige Krümmung, eine Krümmung der Flanken entlang einer Helix oder einer Wendelfläche um die Drehachse des Koaxialgetriebes, oder eine Krümmung in Form einer logarithmischen Spirale. Für eine mögliche Ausführungsform einer Krümmung in Form einer logarithmischen Spirale wird auf die DE 10 2007 011 175 A1 verwiesen. Die gekrümmte Oberfläche bietet den Vorteil, dass die in Eingriff stehenden Flanken flächig und nicht lediglich linien- oder punktförmig anliegen. Auf diese Weise wird eine extreme Steifigkeit bei der Kraftübertragung zwischen der Verzahnung und den Zähnen erreicht. Unter "Flanken" sind hierin insbesondere Zahnflanken der Zähne oder Flanken der Verzahnung zu verstehen.

Bei typischen Ausführungsformen weist ein Zahn in einem der Verzahnung zugewandten ersten Endbereich des Zahns einen Zahnkopf mit Zahnflanken auf. Typischerweise umfasst der Zahn in einem der Kurvenscheibe zugewandten zweiten Endbereich des Zahns eine Zahnbasis. Die Zahnbasis weist typischerweise eine Zahnbasisauswölbung auf. Typischerweise ist die Zahnbasisauswölbung eingerichtet zur Lagerung des Zahns in einer Zahnbucht eines Lagersegments.

Bei typischen Ausführungsformen umfasst der Zahn zwischen dem Zahnkopf und der Zahnbasis einen Zahnrumpf. Der Zahnrumpf erstreckt sich entlang der Längsachse des Zahns über eine Rumpflänge. Typischerweise weist der Zahnrumpf über die Rumpflänge abgesehen von Schmierkanälen oder Ähnlichem zumindest im Wesentlichen einen gleichbleibenden Querschnitt auf.

Bei typischen Ausführungsformen ist der Zahn als Rundzahn ausgeführt. Beispielsweise weist der Zahnrumpf eines Zahns einen zumindest im Wesentlichen gleichbleibenden kreisförmigen Querschnitt auf. Typischerweise ist der Zahnrumpf zumindest im Wesentlichen zylinderförmig ausgeführt.

Bei weiteren typischen Ausführungsformen ist ein Zahn als Flachzahn ausgeführt. Flachzähne werden typischerweise in Führungen mit nicht-rundem Querschnitt in dem Zahnträger geführt. Bei typischen Ausführungsformen weist der Zahn eine mindestens doppelt so große Breite, beispielsweise in Radialrichtung des Koaxialgetriebes, wie Dicke, beispielsweise in Umlaufrichtung des Koaxialgetriebes, auf. Weitere Ausführungsformen umfassen runde, kreisrunde oder ovale Zähne oder runde Zähne mit Abflachungen.

Bei typischen Ausführungsformen ist zwischen der Kurvenscheibe und den Zähnen eine Mehrzahl an Lagersegmenten angeordnet. Typischerweise sind die Lagersegmente eingerichtet zur Lagerung der Zähne an der Kurvenscheibe. Bei typischen Ausführungsformen sind die Lagersegmente ringförmig angeordnet. Typischerweise sind die Lagersegmente in Umfangsrichtung zueinander benachbart angeordnet.

Typischerweise ist jeder der Zähne des Koaxialgetriebes jeweils auf einem der Lagersegmente gelagert. Bei weiteren typischen Ausführungsformen ist jeweils mindestens ein Zahn auf einem der Lagersegmente gelagert, insbesondere jeweils mindestens zwei Zähne oder jeweils mindestens drei Zähne.

Bei typischen Ausführungsformen sind mindestens zwei der Lagersegmente miteinander verbunden, insbesondere integral miteinander verbunden. Beispielsweise sind mindestens zwei der Lagersegmente einstückig hergestellt. Insbesondere sind mindestens drei, mindestens vier oder alle Lagersegmente des Koaxialgetriebes miteinander verbunden oder einstückig hergestellt. Typischerweise sind miteinander verbundene Lagersegmente elastisch miteinander verbunden, beispielsweise durch ein Festkörpergelenk, insbesondere biegbar zum Folgen einer Hubbewegung der Kurvenscheibe in axialer Richtung.

Bei typischen Ausführungsformen ist ein Festkörpergelenk, welches zwei Lagersegmente miteinander verbindet, als Sollbruchstelle eingerichtet. Beispielsweise kann nach der Montage des Koaxialgetriebes ein Zusammenhängen der Lagersegmente nicht mehr notwendig sein. Insbesondere können die Lagersegmente nach dem Bruch des Festkörpergelenks an der Sollbruchstelle über ein loses Gelenk, insbesondere formschlüssig miteinander verbunden sein.

Bei typischen Ausführungsformen sind Lagersegmente gelenkig miteinander verbunden, insbesondere fest oder lose. Typischerweise sind die Lagersegmente fest, insbesondere nicht voneinander lösbar, miteinander verbunden. Typischerweise sind die Lagersegmente zueinander bewegbar und insbesondere eingerichtet zum Folgen einer Hubbewegung der Kurvenscheibe in einer axialen Richtung. Bei weiteren typischen Koaxialgetrieben sind die Lagersegmente als einzelne, lose Lagersegmente ausgeführt.

Bei typischen Ausführungsformen weisen die Lagersegmente jeweils eine Zahnbucht zur Aufnahme eines jeweiligen auf dem Lagersegment gelagerten Zahnes auf. Typischerweise weisen die Lagersegmente jeweils eine Zahnbucht auf. Typischerweise weist die Zahnbucht eine Vertiefung in axialer Richtung auf. In der Vertiefung kann ein Zahn des Koaxialgetriebes aufgenommen sein. Beispielsweise kann die Zahnbucht als einseitig offene Schale ausgeführt sein. Typischerweise ist der Rand der Zahnbucht rechteckig oder oval ausgeführt. Dadurch kann beispielsweise eine Schwenkbewegung des Lagersegments gegenüber dem Zahn ermöglicht werden.

Typischerweise umfassen die Lagersegmente Stege, wobei die Stege jeweils ein erstes der Lagersegmente mit einem benachbarten der Lagersegmente verbinden. Insbesondere kann ein Steg an der dem Zahnträger zugewandten Seite der Lagersegmente angeordnet sein oder bezüglich der axialen Breite der Lagersegmente mittig angeordnet sein. Typischerweise weist der Steg eine axiale Dicke auf, welche geringer ist als die axiale Breite eines Lagersegments. Typischerweise ist der Steg verjüngt gegenüber dem Lagersegment ausgebildet. Typischerweise ist der Steg eines Lagersegments als Festkörpergelenk eingerichtet. Insbesondere weist der Steg eine geringere Biegesteifigkeit auf als eine Zahnbucht des Lagersegments. Insbesondere ist der Steg dazu eingerichtet, eine Beweglichkeit der Lagersegmente relativ zueinander bereitzustellen, insbesondere eine Beweglichkeit in axialer Richtung.

Typischerweise sind die Zähne mit den Lagersegmenten jeweils über einen Rastmechanismus verbunden, insbesondere gegen ein Herausfallen aus den Lagersegmenten gesichert. Typischerweise sind ein Zahn und ein Lagersegment beweglich miteinander verbunden. Beispielsweise können der Zahn und das Lagersegment durch Formschluss oder eine Hinterschneidung oder einen Clip miteinander verbunden sein. Miteinander verbundene Lagersegmente und Zähne können insbesondere eine Montage eines typischen Koaxialgetriebes erleichtern oder vereinfachen.

Bei typischen Ausführungsformen weisen die Zähne jeweils mindestens eine Einkerbung auf, insbesondere mindestens zwei Einkerbungen. Typischerweise umfassen die Lagersegmente jeweils mindestens einen Clip, der zum Formschluss oder zum Kraftschluss mit dem Zahn, insbesondere mit der mindestens einen Einkerbung des Zahns, ausgebildet ist. Typischerweise ist die mindestens eine Einkerbung des Zahns in einem Zahnbasisbereich des Zahns ausgeführt. Der Zahnbasisbereich des Zahns steht typischerweise aus einer Führung des Zahnträgers hervor.

Bei typischen Ausführungsformen ist eine Zahnbucht eines Lagersegments innen mit einem ersten Schwenkradius, insbesondere in Umfangsrichtung, ausgerundet. Bei typischen Ausführungsformen weist ein Zahn des Koaxialgetriebes eine Zahnbasisauswölbung an der Zahnbasis des Zahns auf, insbesondere eine Zahnbasisauswölbung mit einem zweiten Schwenkradius. Insbesondere kann die Zahnbasisauswölbung in halbzylindrischer Form mit dem zweiten Schwenkradius ausgeführt sein, wobei eine Zylinderachse der halbzylindrischen Form beispielsweise in einer radialen Richtung bezüglich der Drehachse des Koaxialgetriebes ausgerichtet ist. Typischerweise ist der zweite Schwenkradius zumindest im Wesentlichen gleich dem ersten Schwenkradius. Typischerweise steht der Zahn mit der Zahnbasisauswölbung in der Zahnbucht. Dadurch kann beispielsweise eine Schwenkbewegung des Lagersegments, insbesondere um eine bezüglich der Drehachse des Koaxialgetriebes radiale Richtung, gegenüber dem Zahn ermöglicht werden.

Typischerweise weisen die Lagersegmente eine Gleitlagerfläche zur Gleitlagerung der Lagersegmente auf der Kurvenscheibe auf. Insbesondere weisen die Lagersegmente jeweils eine Gleitlagerfläche auf. Bei typischen Ausführungsformen weisen die Lagersegmente an der der Kurvenscheibe zugewandten Seite der Lagersegmente mindestens eine Schmiernut auf. Typischerweise ist die Schmiernut an der Grenze zweier benachbarter Lagersegmente ausgebildet. Insbesondere kann die Schmiernut durch zwei aneinandergrenzende Lagersegmente und einen Steg räumlich begrenzt sein. Typischerweise erstreckt sich die Schmiernut in radialer Richtung zwischen zwei Lagersegmenten. Die Schmiernut kann beispielsweise die Einbringung eines Schmiermittels in einen Schmierspalt zwischen der Gleitlagerfläche eines Lagersegments und einer Profilierungsgleitfläche der Profilierung erleichtern. Über die Schmiernut kann beispielsweise ein Schmierstoffaustausch zwischen dem Schmierspalt und einem Getriebeinnenraum des Koaxialgetriebes verbessert werden. Insbesondere können die Schmiernut und insbesondere die Gleitlagerfläche für eine hydrodynamische Gleitlagerfunktion optimiert sein.

Typischerweise umfasst ein Lagersegment an der der Kurvenscheibe zugewandten Seite des Lagersegments eine Gleitlagerfläche und eine Nutfläche. Die Profilierung der Kurvenscheibe weist typischerweise eine den Lagersegmenten zugewandte Profilierungsgleitfläche auf, auf welcher die Lagersegmente mit der jeweiligen Gleitlagerfläche aufliegen. Die Gleitlagerfläche ist typischerweise zumindest im Wesentlichen parallel zu der Profilierungsgleitfläche der Profilierung ausgerichtet. Die Nutfläche ist typischerweise in axialer Richtung zu der Profilierungsgleitfläche geneigt. Insbesondere umfasst ein Lagersegment zwei Nutflächen, beispielsweise jeweils eine Nutfläche zu beiden Seiten der Gleitlagerfläche in Umfangsrichtung. Insbesondere flankieren zwei Nutflächen eine Schmiernut. Typischerweise ist der Übergang zwischen der Gleitlagerfläche und der Nutfläche in Umfangsrichtung verrundet, beispielsweise mit einem Radius verrundet.

Bei typischen Ausführungsformen sind die Lagersegmente aus Kunststoff oder aus Metall hergestellt. Typischerweise sind die Lagersegmente durch ein Urformverfahren oder ein Umformverfahren hergestellt. Bei typischen Ausführungsformen sind die Lagersegmente in einem Urformverfahren aus Kunststoff in einem Kunststoff-Spritzgussverfahren, in einem Kokillengießverfahren oder Druckgussverfahren oder durch Metallpulverspritzgießen (Metal Injection Moulding (MIM)-Verfahren) hergestellt. In weiteren typischen Ausführungsformen sind die Lagersegmente in einem Tiefziehverfahren aus Metall hergestellt. Typischerweise sind die Lagersegmente aus Stahl, Bronze oder Aluminium hergestellt, insbesondere mit Beschichtungen.

Bei typischen Ausführungsformen sind die Teile des Koaxialgetriebes aus Kunststoff, Metall oder Kunststoff-Metall-Verbund hergestellt. Typischerweise sind die Teile des Koaxialgetriebes, insbesondere die Verzahnung, der Zahnträger, die Lagersegmente, die Zähne oder die Kurvenscheibe, durch ein Urformverfahren oder ein Umformverfahren hergestellt. In beispielhaften Ausführungsformen eines Koaxialgetriebes können die Teile des Koaxialgetriebes, die Zähne und die Kurvenscheibe ausgenommen, aus Kunststoff oder Kunststoff-Metall-Verbund hergestellt sein, wobei die Zähne und die Kurvenscheibe aus Metall hergestellt sind. In weiteren beispielhaften Ausführungsformen können die Teile eines Koaxialgetriebes, die Lagersegmente ausgenommen, aus Stahl hergestellt sein, wobei die Lagersegmente aus Kunststoff hergestellt sind.

Bei typischen Ausführungsformen weisen die Lagersegmente jeweils eine zumindest im Wesentlichen konstante Wandstärke auf. Insbesondere können die Zahnbuchten oder die Stege, insbesondere die Zahnbuchten und die Stege, eine zumindest im Wesentlichen konstante Wandstärke aufweisen. Beispielsweise können Lagersegmente mit zumindest im Wesentlichen konstanter Wandstärke für eine Herstellung in einem Spritzgussverfahren oder Tiefziehverfahren besonders geeignet sein.

Bei typischen Koaxialgetrieben kann das Anstellelement mittels einer in das Gehäuse eindrehbaren Zustellmutter axial verstellbar ausgeführt sein. Insbesondere kann das Anstellelement axial auf einem Zwischenlager, beispielsweise einem Widerlagertopf aufliegen, welcher wiederum axial auf der Zustellmutter aufliegt. Durch eine axiale Verstellmöglichkeit des Anstellelements mittels Verdrehung der Zustellmutter kann eine Vorspannung des Koaxialgetriebes stufenlos und schnell verändert werden.

Vorteile typischer Ausführungsformen können eine große Hohlwellenöffnung, die Fähigkeit zur Übertragung hoher Momente sowie eine große Steifigkeit, beispielsweise durch direkte Kraftübertragungen im Koaxialgetriebe, eine geringe Baulänge und die Möglichkeit zur Einstellung eines 0-Spiels, beispielsweise durch Anstellen des Anstellelements sein. Allgemein ergibt sich die Möglichkeit, das Spiel bei typischen Ausführungsformen einzustellen. Ein weiterer Vorteil von Ausführungsformen kann eine einfache Montage sein.

### Kurze Beschreibung der Zeichnungen

Nachfolgend wird die Erfindung anhand der beiliegenden Zeichnungen näher erläutert, wobei die Figuren zeigen:
- Fig. 1: zeigt eine typische Ausführungsform des Koaxialgetriebes in einer schematischen Schnittansicht;
- Fig. 2: zeigt eine schematische Ansicht einer Mehrzahl an Lagersegmenten eines typischen Koaxialgetriebes;
- Fig. 3: zeigt eine weitere schematische Ansicht einer Mehrzahl an Lagersegmenten;
- Fig. 4: zeigt eine schematische Schnittansicht einer Mehrzahl an Lagersegmenten;
- Fig. 5A-C: zeigen jeweils eine schematische Ansicht eines Zahns einer typischen Ausführungsform;
- Fig. 6: zeigt schematisch eine weitere Ausführungsform eines Koaxialgetriebes,
- Fig. 7: zeigt schematisch eine weitere Ausführungsform eines Koaxialgetriebes, und
- Fig. 8: zeigt schematisch einen Ausschnitt einer weiteren Ausführungsform eines Koaxialgetriebes.

### Beschreibung von Ausführungsbeispielen

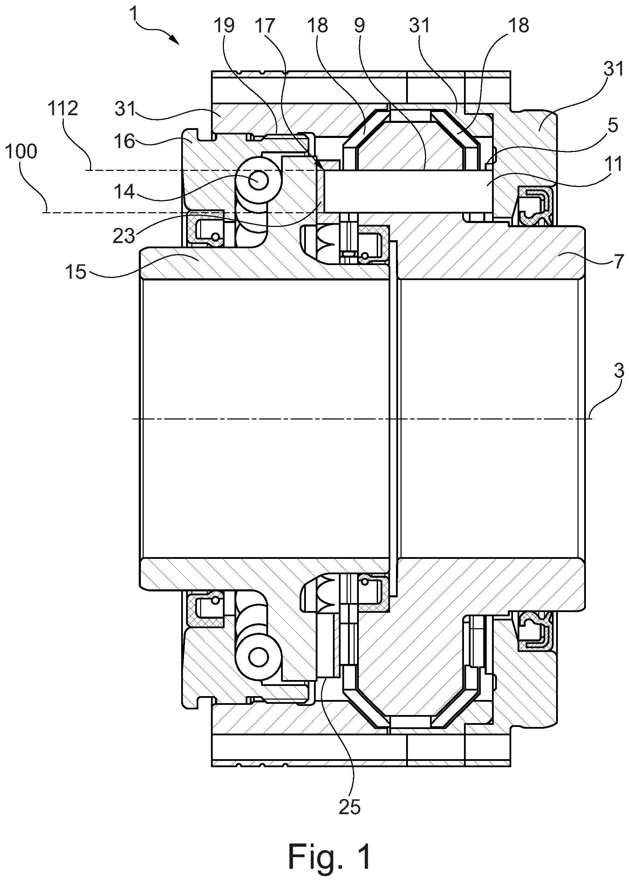

Nachfolgend werden typische Ausführungsformen der Erfindung anhand der Figuren beschrieben, wobei die Erfindung nicht auf die Ausführungsbeispiele beschränkt ist, vielmehr wird der Umfang der Erfindung durch die Ansprüche bestimmt. Bei der Beschreibung der Ausführungsformen werden unter Umständen in verschiedenen Figuren und für verschiedene Ausführungsformen gleiche Bezugszeichen für gleiche oder ähnliche Teile verwendet. Teilweise werden Merkmale, welche bereits im Zusammenhang mit anderen Figuren beschrieben wurden, der Übersichtlichkeit halber nicht nochmals beschrieben. Zur Übersichtlichkeit sind teilweise nicht alle jeweiligen Merkmale mit einem Bezugszeichen versehen, beispielsweise die Lagersegmente (Bezugszeichen 17 in der Figuren 1-4).

In der Fig. 1 ist ein Ausschnitt einer typischen Ausführungsform der Erfindung in einer schematischen Schnittansicht dargestellt. Die Fig. 1 zeigt ein Koaxialgetriebe 1 mit einer bezüglich einer Drehachse 3 des Koaxialgetriebes 1 ausgerichteten Verzahnung 5. Die Verzahnung 5 ist integral in einem der Teile des Gehäuses 31 umlaufend um die Drehachse 3 ausgeführt. Die drei Teile des Gehäuses 31 sind drehfest miteinander verbunden.

Das Koaxialgetriebe 1 umfasst einen Zahnträger 7, welcher integral mit einer Abtriebswelle vorgesehen ist, d.h. die Abtriebswelle und der Zahnträger 7 sind als ein Bauteil ausgeführt.

Der Zahnträger 7 ist über eine Abtriebslagerung um die Drehachse 3 drehbar in dem Gehäuse 31 gelagert. Die Abtriebslagerung ist bei der Ausführungsform der Fig. 1 als Schrägrollenlager 18 ausgeführt, wobei die Rollen des Schrägrollenlagers 18 einerseits unmittelbar auf der Oberfläche des Zahnträgers und andererseits unmittelbar jeweils auf einem Teil des Gehäuses 31 abrollen. Dabei rollt ein erster Teil der Schrägrollen auf einem ersten Teil des Gehäuses 31 ab und ein zweiter Teil der Schrägrollen des Schrägrollenlagers 18 rollt auf einem zweiten Teil des Gehäuses ab.

Der erste und der zweite Teil des Gehäuses 31 werden bei der Montage miteinander verbunden, so dass vorher die Schrägrollen einsetzbar sind. Ein drittes Teil des Gehäuses 31 bildet das Planrad mit der Innenverzahnung 5. Das dritte Teil des Gehäuses 31 ist mit dem zweiten Teil des Gehäuses wie das erste Teil drehfest verbunden.

Der Zahnträger weist axial ausgerichtete Führungen 9 auf, in welchen jeweils Zähne 11 aufgenommen sind. Die Zähne 11 sind entlang ihrer jeweiligen Längsachsen in den Führungen 9 axial bezüglich der Drehachse 3 verschieblich gelagert.

Eine integral mit einer Antriebswelle ausgebildete Kurvenscheibe 15 ist über ein Lager um die Drehachse 3 drehbar an einem Anstellelement 16 gelagert. Das Anstellelement 16 ist als Anstellmutter ausgeführt und mittels eines Gewindes 19 axial verstellbar in dem ersten Teil des Gehäuses 31 befestigt. Das Lager der Kurvenscheibe 15 gegenüber dem Anstellelement 16 kann auch als Antriebslager bezeichnet werden und ist als Schrägkugellager ausgebildet, dessen Wälzkörper 14 dementsprechend Kugeln sind. Durch das Anstellelement 16 kann im Zusammenhang mit dem Schrägkugellager ein axiales Spiel minimiert werden. Das Antriebslager ist dazu ausgebildet, axiale Kräfte aufzunehmen.

Durch die Ausbildung des Antriebslagers als Schrägkugellager mit unsymmetrischem Lagerquerschnitt wird bei Ausführungsformen ein schräg zur Drehachse verlaufender Druckwinkel aufgebaut, so dass eine günstige und stabilisierende Vorspannung des Getriebes erreicht werden kann. Gleichzeitig können axiale und radiale Kräfte aufgenommen werden.

Erfindungsgemäß ist die Verzahnung fest mit einem Teil des Gehäuses verbunden oder integral mit dem Gehäuse ausgeführt.

Typischerweise ist ein Anstellelement in dem Gehäuse axial verstellbar aufgenommen. Eine Möglichkeit ist beispielsweise ein Gewinde im Gehäuse, mit welchem sich die axiale Position des als Anstellmutter ausgeführten Anstellelements verändern lässt. Typischerweise kann das Anstellelement noch zusätzlich axial gesichert werden, beispielsweise verklebt. Bei anderen Ausführungsformen können Klemmmechanismen zur axial veränderlichen Festlegung des Anstellelementes in dem Gehäuse vorgesehen sein.

Die Wälzkörper 14 liegen einerseits unmittelbar auf Oberflächen des einstückig ausgebildeten Anstellelementes 16 auf. Die Kurvenscheibe 15 weist ebenfalls eine Oberfläche für den Kontakt mit den Wälzkörpern 14 auf, so dass die Wälzkörper auch unmittelbar auf der einstückig ausgebildeten Kombination von Kurvenscheibe und Antriebswelle liegen.

Typische Ausführungsformen weisen eine insbesondere unmittelbare oder direkte Lagerung der Kurvenscheibe an dem Anstellelement auf. Dies bedeutet typischerweise, dass keine Lagerschalen für die Wälzköper vorgesehen sind. Auf diese Weise kann eine kompakte Bauform erreicht werden. Analog gilt dies für das Abtriebslager bzw. für den in dem Gehäuse typischerweise ohne Lagerschalen gelagerten Zahnträger.

Typische Ausführungsformen weisen lediglich genau ein Lager zwischen Gehäuse einerseits und Kurvenscheibe mit Antriebswelle andererseits auf. Hintergrund ist, dass die Kurvenscheibe auch durch den Kontakt mit den Lagersegmenten stabilisiert wird. Weiterhin weisen typische Ausführungsformen genau eine Abtriebslagerung auf, insbesondere eine Schrägrollenlagerung, welche typischerweise zwei umlaufende Reihen schräger Rollen umfasst, oder eine Kreuzlagerung, insbesondere mit genau einer umlaufenden Reihe von Wälzkörpern, welche in Umlaufrichtung abwechselnd im rechten Winkel zueinander angeordnet sind.

Der Innendurchmesser der Kurvenscheibe, bzw. der mit der Kurvenscheibe optional integral ausgebildeten Antriebswelle, entspricht bei typischen Ausführungsformen, wie beispielsweise auch bei dem in der Fig. 1 gezeigten Ausführungsbeispiel, zumindest im Wesentlichen dem Innendurchmesser des Zahnträgers bzw. der Abtriebswelle, welche ebenfalls integral mit dem Zahnträger ausgebildet sein kann. Typischerweise bedeutet dabei zumindest im Wesentlichen, dass sich die Innendurchmesser um weniger als 10% oder um weniger als 5% oder um weniger als 2% unterscheiden. Auf diese Weise sind Durchführungen mit zumindest im Wesentlichen konstantem Querschnitt in axialer Richtung durch das Getriebe möglich.

Der Kontaktbereich zwischen den Wälzkörpern 14 und der Kurvenscheibe 15 überschneidet sich in axialer Richtung betrachtet zumindest teilweise mit dem radialen Bereich der Zähne 11 zwischen einem Innenradius 110 der Zähne 11 (nur in der oberen Bildhälfte der Fig. 1 eingezeichnet) und einem Außenradius 112 der Zähne (nur in der oberen Bildhälfte der Fig. 1 eingezeichnet).

Der Kontaktbereich zwischen den Wälzkörpern und der Kurvenscheibe befindet sich bei typischen Ausführungsformen radial zwischen einem Innenradius und einem Außenradius der Zähne oder der in dem Zahnträger angeordneten Führungen. Damit wird eine günstige axiale Kraftweiterleitung erreicht.

Bei typischen Ausführungsformen ist der Zahnträger in dem Gehäuse mittels einer Abtriebslagerung gelagert, deren Abtriebswälzkörper radial außerhalb der Zähne angeordnet sind. Dabei bedeutet "radial außerhalb" typischerweise, dass die Wälzkörper vollständig außerhalb eines Außenradiusses der Zähne angeordnet sind. Typischerweise sind die Abtriebswälzkörper in einem axialen Bereich der Zähne oder in einem axialen Bereich der Führungen angeordnet. Auf diese Weise wird eine kompakte Bauform erreicht. Der axiale Bereich der Führungen bezeichnet dabei beispielsweise den Bereich entlang der Achse des Getriebes, welcher sich axial zwischen den beiden Öffnungen der Führungen im Zahnträger befindet.

Bei dem Ausführungsbeispiel der Fig. 1 sind die schräg angeordneten Rollen des Schrägrollenlagers 18, welche die Abtriebswälzkörper bilden, vollständig radial außerhalb des Außenradius 112 der Zähne 11 bzw. der Führungen 9 angeordnet. Weiterhin sind die schräg angeordneten Rollen in axialer Richtung vollständig zwischen den beiden Öffnungen der Führungen 9 angeordnet. "Axial dazwischen" bedeutet dabei beispielsweise, dass die Abtriebswälzkörper, d.h. die schrägen Rollen bei dem Ausführungsbeispiel der Fig. 1, zwischen einer auf Höhe des einen Endes der Führungen 9 und auf der Drehachse 3 senkrecht stehenden Ebene und einer auf Höhe des anderen Endes der Führungen 9 und auf der Drehachse 3 senkrecht stehenden Ebene angeordnet sind.

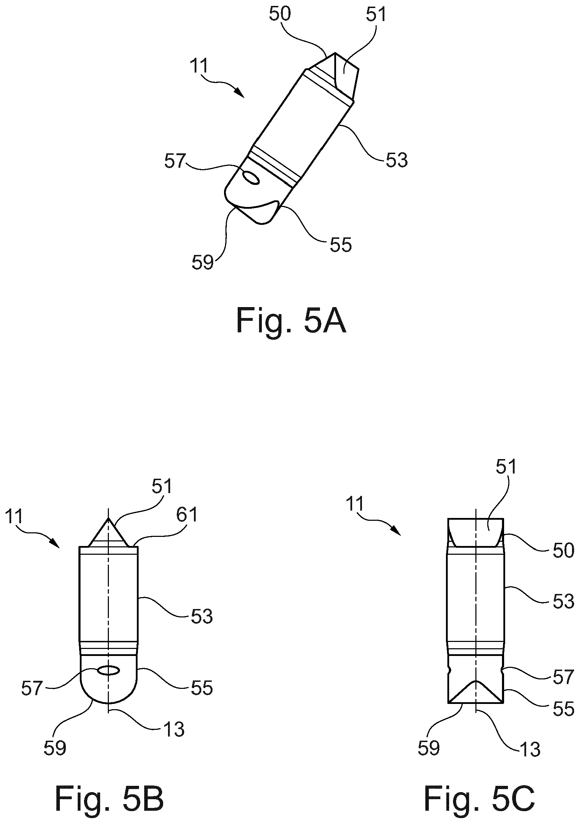

Die Zähne 11 umfassen jeweils einen Zahnkopf, welcher zum Eingriff mit der Verzahnung 5 ausgerichtet ist, und eine Zahnbasis, welche aus der Führung 9 des jeweiligen Zahns 11 hervorsteht und an einem Lagersegment 17 gelagert ist. Ein Zahn 11 umfasst weiterhin einen Zahnrumpf zwischen der Zahnbasis und dem Zahnkopf, wobei der Zahnrumpf zumindest teilweise in der Führung 9 des Zahns 11 aufgenommen ist. Die Zahnbasis des Zahns 11 steht in einer Zahnbucht 19 des Lagersegments 17. Das Lagersegment 17 und der Zahn 11 sind über einen Rastmechanismus miteinander verbunden. In der Fig. 1 ist der Rastmechanismus durch einen Clip 27 des Lagersegments 17 und zwei Einkerbungen (siehe Fig. 5A-C) des Zahns 11 bereitgestellt.

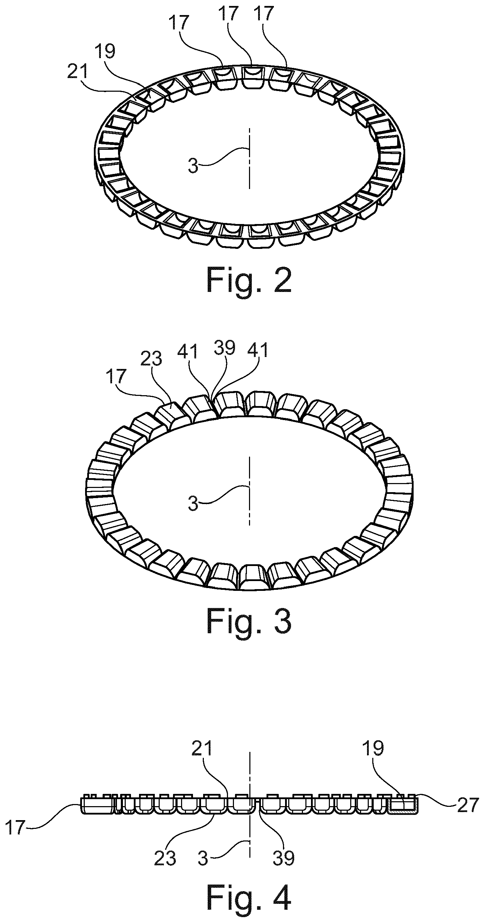

Die Lagersegmente sind in den Fig. 2 bis 4 genauer dargestellt. Jedes Lagersegment 17 der Mehrzahl an Lagersegmenten 17 weist eine Zahnbucht 19 auf, welche als Vertiefung in axialer Richtung ausgeführt ist. Die Zahnbuchten 19 sind jeweils in Umfangsrichtung mit einem ersten Schwenkradius ausgerundet. Jeweils zwei Lagersegmente 17 sind durch einen Steg 21 der Lagersegmente 17 miteinander verbunden. Insbesondere verbindet der Steg 21 jeweils eine Zahnbucht 19 eines ersten der Lagersegmente 17 mit der Zahnbucht 19 eines benachbarten der Lagersegmente 17.

Die Lagersegmente 17 sind jeweils über eine Gleitlagerfläche 23 an einer Profilierung 25 einer Kurvenscheibe 15 des Koaxialgetriebes 1 gelagert. Die Kurvenscheibe 15 ist integral mit einer Antriebswelle ausgebildet. Die Profilierung 25 ist um die Drehachse 3 umlaufend ausgeführt und weist bei der Ausführungsform der Fig. 1 zwei axiale Erhebungen in Richtung der Zähne 11 auf. Die Lagerflächen, insbesondere die Gleitlagerflächen 23 und eine Profilierungsgleitfläche der Profilierung 25, sind mit einem Schmiermittel geschmiert. Die Gleitlagerfläche 23 eines Lagersegments 17 ist an der der Profilierung 25 zugewandten Seite der Zahnbucht 19 des Lagersegments 17 vorgesehen.

Zwischen den Gleitlagerflächen 23 zweier benachbarter Lagersegmente 17 weisen die Lagersegmente 17 eine Schmiernut 39 auf. Die Schmiernut 39 zwischen den Gleitlagerflächen 23 zweier benachbarter Lagersegmente 17 wird durch einen Steg 21 zwischen zwei benachbarten Lagersegmenten 17 überbrückt. Durch die Schmiernut 39 kann beispielsweise die Einbringung von Schmiermittel in einen Schmierspalt zwischen der Gleitlagerfläche 23 und einer Profilierungsgleitfläche der Profilierung 25 verbessert werden.

Die Figuren 2 und 3 zeigen Ansichten einer Mehrzahl an Lagersegmenten 17 eines typischen Koaxialgetriebes. Die Lagersegmente 17 sind ringförmig miteinander verbunden. Insbesondere sind die Lagersegmente 17 entlang eines mit der Drehachse 3 des Koaxialgetriebes 1 konzentrischen Rings angeordnet. Die Fig. 2 zeigt eine Ansicht der den Zähnen des Koaxialgetriebes zugewandten Seite der Lagersegmente 17. Die Lagersegmente 17 umfassen jeweils eine Zahnbucht 19 und einen Steg 21. Die Zahnbucht 19 ist in der Form einer Schale ausgeführt, die in Richtung der Zähne des Koaxialgetriebes geöffnet und zur Aufnahme der Zähne eingerichtet ist. Die Zahnbuchten 19 sind jeweils in Umfangsrichtung mit einem ersten Schwenkradius ausgerundet. Die Zahnbuchten 19 und die Stege 21 weisen eine zumindest im Wesentlichen konstante Wandstärke auf.

Die Fig. 3 zeigt eine Ansicht der der Profilierung der Kurvenscheibe zugewandten Seite der Lagersegmente 17. Die Zahnbuchten 19 der Lagersegmente 17 weisen jeweils an der der Profilierung zugewandten Seite eine Gleitlagerfläche 23 auf. Typischerweise liegen die Gleitlagerflächen 23 auf einer Profilierungsgleitfläche der Profilierung auf. Die Gleitlagerflächen 23 sind jeweils lokal, d. h. an jener Stelle der Profilierungsgleitfläche, an welcher eine Gleitlagerfläche 23 auf der Profilierungsgleitfläche der Profilierung aufliegt, zumindest im Wesentlichen parallel zu der Profilierungsgleitfläche der Profilierung ausgerichtet. Zwischen den Gleitlagerflächen 23 zweier benachbarter Lagersegmente 17 weisen die zwei Lagersegmente 17 eine Schmiernut 39 auf. Die Schmiernut 39 erstreckt sich in radialer Richtung entlang der Lagersegmente 17. Eine Gleitlagerfläche 23 wird von zwei Nutflächen 41 flankiert, wobei die Nutflächen 41 zu der Profilierungsgleitfläche der Profilierung geneigt oder verrundet sind. In der Fig. 3 wird die Schmiernut 39 axial in Richtung der Zähne durch den Steg 21 begrenzt.

Die Fig. 4 zeigt eine Schnittansicht einer ringförmig angeordneten Mehrzahl an Lagersegmenten 17. Die Lagersegmente 17 umfassen jeweils eine Zahnbucht 19 und einen Clip 27. Der Clip 27 ist elastisch ausgeführt, so dass sich der Clip 27 während des Einsteckens eines Zahns in die Zahnbucht elastisch verformen kann. Der Clip 27 ist eingerichtet, in Einkerbungen (Fig. 5A-C) eines in die Zahnbucht 19 eingesteckten Zahns einzugreifen und in den Einkerbungen zu verrasten.

Die Figuren 5A bis 5C zeigen schematische Ansichten eines Zahns 11 eines typischen Koaxialgetriebes in einer beispielhaften Ausführungsform und werden im Folgenden gemeinsam beschrieben. Dabei zeigt Fig. 5B eine Seitenansicht auf das Zahnprofil des Zahns 11 und die Fig. 5C eine Seitenansicht senkrecht zur Ansichtsebene der Fig. 5B. Der Zahn 11 umfasst einen Zahnkopf 50 mit Zahnflanken 51, die zum Eingriff mit einer Verzahnung des Koaxialgetriebes eingerichtet sind.

Der Zahn 11 umfasst einen Zahnrumpf 53, der zur Aufnahme in eine Führung eines Zahnträgers vorgesehen ist. Der Zahnrumpf 53 weist einen zumindest im Wesentlichen gleichbleibenden Durchmesser im Querschnitt zu der Längsachse des Zahns 11 und einen kreisrunden Querschnitt auf. Das Ausführungsbeispiel der Figuren 5A-C weist am Übergang zwischen dem Zahnkopf 50 und dem Zahnrumpf 53 eine von dem Zahnrumpf 53 in Richtung der Längsachse nach innen zurückspringende Schulter 61 auf.

Typischerweise steht zumindest ein Teil einer Zahnbasis 55 des Zahns 11 aus der Führung des Zahnträgers hervor. Die Zahnbasis 55 des Zahns 11 umfasst in den Figuren 5A-C zwei Einkerbungen 57. Die Einkerbungen 57 sind dazu eingerichtet, den Zahn 11 über einen Rastmechanismus mit einem Lagersegment des Koaxialgetriebes zu verbinden, insbesondere über eine formschlüssige oder kraftschlüssige Verbindung mit einem Clip des Lagersegments. Die Zahnbasis 55 weist eine Zahnbasisauswölbung 59 auf. Die Zahnbasiswölbung 59 ist in den Figuren 5A-C als halbzylindrische Auswölbung in Richtung der Längsachse ausgeführt. Die Zahnbasisauswölbung 59 ist mit einem zweiten Schwenkradius ausgeführt. Die Zahnbasiswölbung 59 ist zur Aufnahme in einer Zahnbucht eines Lagersegments eingerichtet, wobei die Zahnbucht mit einem ersten Schwenkradius ausgerundet ist, welcher zumindest im Wesentlichen dem zweiten Schwenkradius der Zahnbasisauswölbung 59 entspricht.

Die Zahnbasis 55 ist gegenüber dem Zahnrumpf 53 verjüngt ausgebildet. Der Übergangsbereich zwischen der Zahnbasis 55 und dem Zahnrumpf 53 ist leicht gegenüber einer Längsachse des Zahns 11 geneigt. Die Kanten zwischen der Zahnbasis 55 und dem Zahnrumpf 53 sind verrundet. Der Zahn 11 liegt somit nur im Bereich des Zahnrumpfs 53 in einer Führung des Zahnträgers an. Durch die Verjüngung des Zahns 11 vom Zahnrumpf 53 zur Zahnbasis 55 kann beispielsweise Schmiermittel in die Führung gezogen werden und somit der Zahn gegenüber der Führung geschmiert werden.

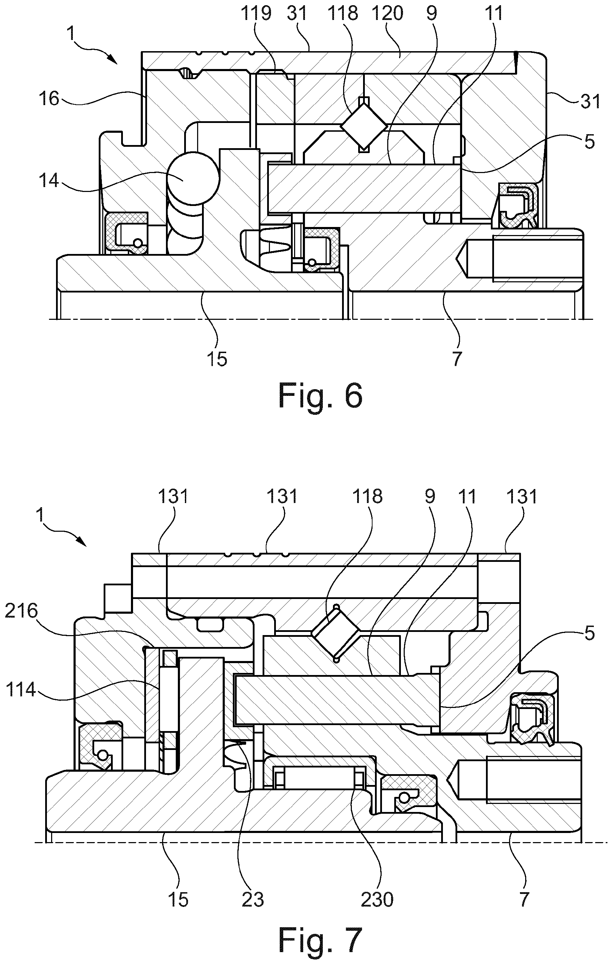

Die Fig. 6 zeigt schematisch in einem teilweisen Schnitt eine weitere Ausführungsform eines Koaxialgetriebes 1. Das Koaxialgetriebe 1 der Fig. 6 weist ein Kreuzrollenlager 118 auf, welches den Zahnträger 7 lagert, der integral mit der Abtriebswelle ausgebildet ist. Das Kreuzrollenlager 118 wird über eine separate Wellenmutter 119 gegen einen Widerlagerblock 120 innerhalb des Gehäuses verspannt. Die Wellenmutter 119 ist in einem Teil des Gehäuses 31 mit einem Gewinde zur Axialverstellung aufgenommen. Bei der Ausführungsform der Fig. 6 umfasst das Gehäuse 31 lediglich zwei Teile, wobei einer der Teile das Planrad mit der Verzahnung 5 umfasst und auch als Abstützung für den Widerlagerblock 120 dient. Der andere Teil des Gehäuses 31 ist fixiert mit dem ersten Teil verbunden und nimmt die Wellenmutter sowie das Anstellelement auf. Zwischen dem Zahnträger 7 und den Wälzkörpern des Kreuzrollenlagers 118 sind keine Lagerschalen angeordnet. Im Übrigen entspricht die Ausführungsform der Fig. 6 in zahlreichen Teilen der Ausführungsform der Fig. 1.

Die Fig. 7 zeigt schematisch in einem teilweisen Schnitt eine weitere Ausführungsform eines Koaxialgetriebes 1. Das Koaxialgetriebe 1 der Fig. 7 weist ein Kreuzrollenlager 118 auf, welches den Zahnträger 7 lagert, der integral mit der Abtriebswelle ausgebildet ist. Bei der Ausführungsform der Fig. 7 umfasst das Gehäuse 131 drei Teile, wobei einer der Teile das Planrad mit der Verzahnung 5 umfasst. Der mittlere Teil des Gehäuses 131 nimmt das Kreuzrollenlager 18 auf und ist fixiert mit dem ersten Teil verbunden. Der dritte und im Bild linke Teil des Gehäuses 131 dient als Widerlager für das Anstellelement 216, welches wiederum als Ring ausgeführt ist. Das Anstellelement kann ausgetauscht oder in seiner axialen Dicke verändert werden, um ein Spiel des Koaxialgetriebes 1 einzustellen. Unmittelbar auf dem Anstellelement 216 rollen Nadelrollen 114 als Wälzkörper eines Axial-Nadelrollenlagers ab. Die Nadelrollen als Wälzkörper 114 des Koaxialgetriebes 1 stützen die Kurvenscheibe axial fluchtend mit den Zähnen 11 ab. Die Nadelrollen laufen unmittelbar auf einer Oberfläche der Kurvenscheibe 15.

Bei Ausführungsformen kann eine Nadelbüchse 230 als Radialrollenlager vorgesehen sein, um die Kurvenscheibe 15 auch in radialer Richtung zu lagern. Diese Lagerung kann entweder wie in der Fig. 7 gezeigt im Zahnträger 7 erfolgen oder optional auch direkt im Gehäuse 131. Bei weiteren Ausführungsformen kann anstelle der Nadelbüchse 230 ein Rillenkugellager vorgesehen sein, um die Kurvenscheibe 15 auch in radialer Richtung zu lagern.

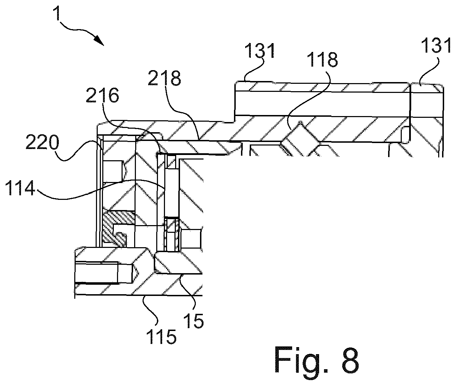

Die Fig. 8 zeigt schematisch in einem teilweisen Schnitt eine weitere Ausführungsform eines Koaxialgetriebes 1. Teile der Darstellung, welche identisch sein können mit der Ausführungsform, die in Fig. 7 gezeigt ist, sind zur besseren Übersichtlichkeit weggelassen.

Das Koaxialgetriebe 1 der Fig. 8 umfasst ein Anstellelement 216, welches axial auf einem Widerlagertopf 218 aufliegt. Der Widerlagertopf 218 weist mittig eine Aussparung zur Durchführung einer Antriebswelle 115 auf, an welcher die Kurvenscheibe 15 befestigt ist.

Im Unterschied zur Ausführungsform der Fig. 7 ist bei der Ausführungsform der Fig. 8 die Kurvenscheibe und die Antriebswelle nicht einteilig, sondern sind zweiteilig ausgeführt.

Mit seinem Außenumfang liegt der Widerlagertopf 218 an einer zylinderförmigen Innenseite des Gehäuses 131 an und ist so axial verschieblich in dem Gehäuse 131 aufgenommen. Das ringförmige Anstellelement 216 liegt auf dem Boden des Widerlagertopfes 218 auf und dient der Lagerung der Wälzkörper 114, welche die Kurvenscheibe 15 lagern.

Der Widerlagertopf 218 liegt wiederum axial auf einer Zustellmutter 220 auf, welche axial in das Gehäuse 131 eindrehbar ist und durch Verdrehen in ihrer axialen Lage relativ zu dem Gehäuse 131 und damit auch beispielsweise zu einem Zahnträger oder einer Abtriebswelle einstellbar ist.

Durch die axiale Verstellbarkeit der Zustellmutter innerhalb des Gehäuses müssen Bauteile des Koaxialgetriebes, wie beispielsweise das Anstellelement, der Widerlagertopf, die Rundzähne, die Lagersegmente, die Kurvenscheibe, die Wälzkörper, das Gehäuse, der Zahnträger oder das Planrad nicht besonders bezüglich ihrer axialen Dicke ausgesucht werden, um ein Spiel des Koaxialgetriebes 1 einzustellen.

In einer alternativen Ausgestaltung können die Wälzkörper auch direkt auf Laufflächen des Gehäuses laufen. Bei einer einteiligen Ausführung des Gehäuses im Bereich der Laufflächen kann eine Befüllung über eine Einfüllöffnung im Gehäuse erfolgen. Dies hat den Vorteil, dass eine definierte Vorspannung der Wälzkörper vorliegt und die Bauteilanzahl reduziert werden kann.

## Patentansprüche

1. Koaxialgetriebe (1), mit
einem Gehäuse (31, 131),
einer bezüglich einer Drehachse (3) des Koaxialgetriebes (1) axial ausgerichteten Verzahnung (5); welche fest mit einem Teil des Gehäuses (31, 131) verbunden oder integral mit dem Gehäuse (31, 131) ausgeführt ist.
einem Zahnträger (7) mit axial ausgerichteten Führungen (9);
Zähnen (11), welche in den Führungen (9) zum Eingriff mit der Verzahnung (5) aufgenommen sind, wobei die Zähne (11) in den Führungen (9) mit ihren jeweiligen Längsachsen axial ausgerichtet und in den Führungen (9) axial verschieblich gelagert sind;
einer um die Drehachse (3) rotierbaren Kurvenscheibe (15) zum axialen Antrieb der Zähne (11); und
einem in dem Gehäuse (31, 131) zur Lagerung der Kurvenscheibe (15) vorgesehenen Anstellelement (16, 216), wobei zwischen dem Anstellelement und der Kurvenscheibe (15) zumindest ein Lager mit Wälzkörpern (14, 114) angeordnet ist.

2. Koaxialgetriebe (1) nach Anspruch 1, wobei das Anstellelement (16, 216) in dem Gehäuse (31), insbesondere zur Einstellung eines Verdrehspiels, axial verstellbar und/oder austauschbar und/oder dickenverstellbar aufgenommen ist.

3. Koaxialgetriebe (1) nach einem der vorhergehenden Ansprüche, wobei die Wälzkörper (14) einerseits unmittelbar auf einer Kurvenscheibenlagerfläche der Kurvenscheibe (15) und/oder andererseits unmittelbar auf einer Anstellelementlagerfläche des Anstellelementes (16, 216) aufliegen.

4. Koaxialgetriebe (1) nach Anspruch 3, wobei ein Kontaktbereich zwischen den Wälzkörpern (14, 114) und der Kurvenscheibe (15) in axialer Richtung betrachtet sich zumindest teilweise mit einem radialen Bereich der Zähne (11) überschneidet.

5. Koaxialgetriebe (1) nach einem der vorhergehenden Ansprüche, wobei der Zahnträger (7) in dem Gehäuse (31, 131) mittels einer Abtriebslagerung gelagert ist, deren Abtriebswälzkörper radial außerhalb der Zähne angeordnet sind.

6. Koaxialgetriebe (1) nach Anspruch 5, wobei die Abtriebswälzkörper in einem axialen Bereich mit den Zähnen angeordnet sind.

7. Koaxialgetriebe (1) nach Anspruch 5 oder 6, wobei die Abtriebslagerung als Kreuzrollenlager (118) oder als Schrägrollenlager (18) ausgeführt ist.

8. Koaxialgetriebe (1) nach einem der vorhergehenden Ansprüche, wobei der Innendurchmesser der Kurvenscheibe zumindest im Wesentlichen dem Innendurchmesser des Zahnträgers entspricht.

9. Koaxialgetriebe (1) nach einem der vorhergehenden Ansprüche, wobei zwischen der Kurvenscheibe (15) und den Zähnen (11) eine Mehrzahl an Lagersegmenten (17) zur Lagerung der Zähne (11) angeordnet ist.

10. Koaxialgetriebe (1) nach Anspruch 9, wobei die Lagersegmente (17) eine Gleitlagerfläche (23) zur Gleitlagerung der Lagersegmente (17) auf der Kurvenscheibe (15) aufweisen.

11. Koaxialgetriebe (1) nach einem der vorhergehenden Ansprüche, wobei das Anstellelement als Ring ausgeführt ist und / oder über ein axiales Widerlager am Gehäuse abgestützt ist.

12. Koaxialgetriebe (1) nach einem der vorhergehenden Ansprüche, wobei das Anstellelement (216) mittels einer in das Gehäuse (131) eindrehbaren Zustellmutter (220) axial verstellbar ist.

13. Koaxialgetriebe (1) nach Anspruch 12, wobei das Anstellelement (216) axial auf einem Widerlagertopf (218) aufliegt, welcher wiederum axial auf der Zustellmutter (220) aufliegt.

14. Verwendung eines Koaxialgetriebes nach einem der vorhergehenden Ansprüche, wobei durch Veränderung der axialen Position des Anstellelements (16, 216) und/oder durch einen Austausch und/oder einer Änderung der Dicke des Anstellelements (216) eine axiale Zustellung der Kurvenscheibe (15) erfolgt.

## Claims

1. Coaxial transmission (1), comprising
a housing (31, 131),
a toothing (5) which is axially aligned with respect to an axis of rotation (3) of the coaxial transmission (1) and which is fixedly connected to a part of the housing (31, 131) or is designed integrally with the housing (31, 131);
a tooth carrier (7) having axially aligned guides (9);
teeth (11) which are received in the guides (9) for engagement with the toothing (5), wherein the teeth (11) are axially aligned in the guides (9) with the respective longitudinal axes thereof and are mounted in the guides (9) in an axially movable manner;
a cam disc (15) rotatable about the axis of rotation (3) for axially driving the teeth (11); and
an adjusting element (16, 216) provided in the housing (31, 131) for mounting the cam disc (15), wherein at least one bearing with rolling elements (14, 114) is arranged between the adjusting element and the cam disc (15).

2. Coaxial transmission (1) according to claim 1, wherein the adjusting element (16, 216) is accommodated in the housing (31), in particular for adjusting a circumferential backlash, in an axially adjustable and/or replaceable and/or thickness-adjustable manner.

3. Coaxial transmission (1) according to either of the preceding claims, wherein the rolling elements (14) rest directly on a cam disc bearing surface of the cam disc (15) and/or directly on an adjusting element bearing surface of the adjusting element (16, 216).

4. Coaxial transmission (1) according to claim 3, wherein a contact region between the rolling elements (14, 114) and the cam disc (15), viewed in the axial direction, overlaps at least partially with a radial region of the teeth (11).

5. Coaxial transmission (1) according to any of the preceding claims, wherein the tooth carrier (7) is mounted in the housing (31, 131) by means of an output bearing, the output rolling elements of which are arranged radially outside the teeth.

6. Coaxial transmission (1) according to claim 5, wherein the output rolling elements are arranged in an axial region with the teeth.

7. Coaxial transmission (1) according to either claim 5 or claim 6, wherein the output bearing is designed as a cross roller bearing (118) or as an inclined roller bearing (18).

8. Coaxial transmission (1) according to any of the preceding claims, wherein the inner diameter of the cam disc corresponds at least substantially to the inner diameter of the tooth carrier.

9. Coaxial transmission (1) according to any of the preceding claims, wherein a plurality of bearing segments (17) for bearing the teeth (11) is arranged between the cam disc (15) and the teeth (11).

10. Coaxial transmission (1) according to claim 9, wherein the bearing segments (17) have a slide bearing surface (23) for slide-bearing the bearing segments (17) on the cam disc (15).

11. Coaxial transmission (1) according to any of the preceding claims, wherein the adjusting element is designed as a ring and/or is supported on the housing by means of an axial abutment.

12. Coaxial transmission (1) according to any of the preceding claims, wherein the adjusting element (216) is axially adjustable by means of a feed nut (220) which can be screwed into the housing (131).

13. Coaxial transmission (1) according to claim 12, wherein the engaging element (216) rests axially on an abutment pot (218) which in turn rests axially on the feed nut (220).

14. Use of a coaxial transmission according to any of the preceding claims, wherein an axial feed of the cam disc (15) takes place by changing the axial position of the adjusting element (16, 216) and/or by an exchange and/or a change in the thickness of the adjusting element (216).

## Revendications

1. Engrenage coaxial (1), comportant
un boîtier (31, 131),
une denture (5) alignée axialement par rapport à un axe de rotation (3) de l'engrenage coaxial (1) ; laquelle est reliée de manière fixe à une partie du boîtier (31, 131) ou formée d'une seule pièce avec le boîtier (31, 131),
un porte-dents (7) comportant des guides (9) alignés axialement ;
des dents (11), lesquelles sont reçues dans les guides (9) pour entrer en prise avec la denture (5), les dents (11) étant alignées axialement avec leurs axes longitudinaux respectifs dans les guides (9) et étant logées de manière déplaçable axialement dans les guides (9) ;
une came (15) rotative autour de l'axe de rotation (3) pour l'entraînement axial des dents (11) ; et
un élément de positionnement (16, 216) prévu dans le boîtier (31, 131) pour le logement de la came (15), au moins un palier comportant des corps roulants (14, 114) étant disposé entre l'élément de positionnement et la came (15).

2. Engrenage coaxial (1) selon la revendication 1, dans lequel l'élément de positionnement (16, 216) est reçu de manière ajustable axialement et/ou remplaçable et/ou ajustable en épaisseur dans le boîtier (31), en particulier pour le réglage d'un jeu de rotation.

3. Engrenage coaxial (1) selon l'une des revendications précédentes, dans lequel les corps roulants (14) s'appuient d'un côté directement sur une surface de palier de came de la came (15) et/ou de l'autre côté directement sur une surface de palier d'élément de positionnement de l'élément de positionnement (16, 216).

4. Engrenage coaxial (1) selon la revendication 3, dans lequel une zone de contact entre les corps roulants (14, 114) et la came (15), vue dans la direction axiale se chevauche au moins partiellement avec une zone radiale des dents (11).

5. Engrenage coaxial (1) selon l'une des revendications précédentes, dans lequel le porte-dents (7) est logé dans le boîtier (31, 131) au moyen d'un palier de sortie dont les corps roulants de sortie sont disposés radialement en dehors des dents.

6. Engrenage coaxial (1) selon la revendication 5, dans lequel les corps roulants de sortie sont disposés dans une zone axiale avec les dents.

7. Engrenage coaxial (1) selon la revendication 5 ou 6, dans lequel le palier de sortie est formé en tant que roulements à rouleaux croisés (118) ou roulements à rouleaux coniques (18).

8. Engrenage coaxial (1) selon l'une des revendications précédentes, dans lequel le diamètre interne de la came correspond au moins essentiellement au diamètre interne du porte-dents.

9. Engrenage coaxial (1) selon l'une des revendications précédentes, dans lequel une pluralité de segments de palier (17) pour le logement des dents (11) sont disposés entre la came (15) et les dents (11).

10. Engrenage coaxial (1) selon la revendication 9, dans lequel les segments de palier (17) présentent une surface de palier de glissement (23) pour le montage à glissement des segments de palier (17) sur la came (15).

11. Engrenage coaxial (1) selon l'une des revendications précédentes, dans lequel l'élément de positionnement est formé en tant que bague et/ou repose sur le boîtier par le biais d'un palier de butée axial.

12. Engrenage coaxial (1) selon l'une des revendications précédentes, dans lequel l'élément de positionnement (216) est ajustable axialement au moyen d'un écrou de réglage (220) pouvant être vissé dans le boîtier (131).

13. Engrenage coaxial (1) selon la revendication 12, dans lequel l'élément de positionnement (216) est posé axialement sur un pot de palier (218), lequel est posé à son tour axialement sur l'écrou de réglage (220).

14. Utilisation d'un engrenage coaxial selon l'une des revendications précédentes, dans laquelle un ajustement axial de la came (15) s'effectue par une modification de la position axiale de l'élément de positionnement (16, 216) et/ou par un remplacement et/ou une modification de l'épaisseur de l'élément de positionnement (216).
